# EUROPÄISCHE PATENTSCHRIFT

(11) **EP 2 607 771 B1**
(45) Veröffentlichungstag und Bekanntmachung des Hinweises auf die Patenterteilung: **24.06.2020**
(21) Anmeldenummer: 12197911.6
(22) Anmeldetag: 18.12.2012
(51) Int. Cl.: F16L 37/12, F16L 25/00, F16L 37/098

(54) **Verbindungseinheit und eine derartige Verbindungseinheit umfassende Verbindungsanordnung zur Herstellung einer unlösbaren Verbindung medienführender Leitungen**
Connection unit and connection assembly comprising such a connection unit for producing a permanent connection between lines containing media
Unité de raccordement et une telle unité de raccordement comprenant un agencement de connexion pour la fabrication d'une liaison inamovible de conduites de transport.

(30) Priorität: 20.12.2011 DE 102011089099
(43) Veröffentlichungstag der Anmeldung: 26.06.2013
(73) Patentinhaber: Fränkische Industrial Pipes GmbH & Co. KG, 97486 Königsberg (DE)
(72) Erfinder: Schröter, Sören, 96103 Hallstadt (DE); Bibinger, Günter, 81735 München (DE)
(74) Vertreter: Weickmann & Weickmann PartmbB

(56) Entgegenhaltungen:
- WO-A1-98/21516
- DE-A1- 4 334 529
- US-A1- 2004 061 332
- US-B1- 6 199 913

## Beschreibung

Die Erfindung betrifft eine Verbindungseinheit, umfassend einen Grundkörper, der dazu ausgebildet und bestimmt ist, mit einem nicht Teil der Verbindungseinheit bildenden Anschlussstutzen verbunden zu werden, eine Hülse, die im montierten Zustand der Verbindungseinheit an dem Grundkörper in bezogen auf eine Längsachse der Verbindungseinheit axialer Richtung befestigt ist und mit dem Grundkörper einen zu einem Ende des Grundkörpers hin offenen Aufnahmeraum bildet, der zur Aufnahme des Anschlussstutzens bestimmt ist, und eine Halteeinheit, welche eine zur Öffnungsrichtung des Aufnahmeraums entgegengesetzt gerichtete Anlagefläche aufweist, welche zum Zusammenwirken mit einer in Öffnungsrichtung gerichteten Gegenanlagefläche des Anschlussstutzens bestimmt ist, sowie eine eine derartige Verbindungseinheit umfassende Verbindungsanordnung, wie sie insbesondere bei medienführenden Leitungssystemen zum Einsatz kommen, beispielsweise in Leitungssystemen von Kraftfahrzeugen.

Bereits an dieser Stelle sei darauf hingewiesen, dass die Angaben "in axialer Richtung" und "in radialer Richtung" stets Angaben sind, die sich auf die Längsachse der Verbindungseinheit beziehen. Mit Bezug auf die "Öffnungsrichtung" des Aufnahmeraums sei angemerkt, dass sich diese entgegengesetzt zur "Einführrichtung" des Anschlussstutzens in den Aufnahmeraum erstreckt. Zudem bedeutet die Angabe "in axialer Richtung befestigt" lediglich, dass das fragliche Teil in Öffnungsrichtung des Aufnahmeraums nicht vom Grundkörper abgezogen werden kann, jedoch nicht notwendigerweise, dass dass die beiden Teile in axialer Richtung vollkommen starr aneinander festegelegt sind.

In jüngster Zeit wird der Einsatz von unlösbaren Verbindunganordnungen verstärkt gefordert, um eine unbewusste Demontage oder den Versuch von Manipulationen an den Verbindungsanordnungen verhindern zu können. Diese Forderung wird insbesondere für Niederemissionsfahrzeuge erhoben, beispielsweise von der CARB-Zulassungsbehörde (CARB - California Air Resources Board) für den Einsatz von Automobilen und Motorrädern.

Derartige unlösbare Verbindungsanordnungen und Verbindungseinheiten sind an sich bekannt. Sie umfassend etliche Bauteile, wobei zumindest einige ihrer Komponenten, insbesondere die Hülse oder/und die Halteinheit, vorzugsweise als Spritzgussteile aus Kunststoff gefertigt werden. Das Zusammenfügen dieser Bauteile zur Verbindungseinheit bzw. der Verbindungsanordnung ist dabei häufig sehr aufwändig.

Eine Verbindungseinheit gemäß dem Oberbegriff des Anspruchs 1 ist aus der WO 98/21516 A1 bekannt.

Es ist die Aufgabe der vorliegenden Erfindung, eine Verbindungseinheit der gattungsgemäßen Art derart weiterzubilden, dass eine vereinfachte Herstellung und eine vereinfachte und sichere Montage der Bauteile zur Verbindungseinheit erzielt werden kann.

Diese Aufgabe wird erfindungsgemäß durch eine Verbindungseinheit mit den Merkmalen des Anspruchs 1 gelöst. Gemäß der Erfindung sind die Hülse und die Halteeinheit miteinander einstückig ausgebildet, wobei die Halteeinheit eine in Öffnungsrichtung des Aufnahmeraums gerichtete weitere Anlagefläche aufweist, welche zum Zusammenwirken mit einer zur Öffnungsrichtung entgegengesetzt gerichteten weiteren Gegenanlagefläche des Grundkörpers bestimmt ist. Durch die einstückige Ausbildung von Hülse und Halteeinheit braucht zunächst ein Bauteil weniger spritzgegossen zu werden. Die möglicherweise etwas höheren Kosten für die Spritzgussform werden durch die bessere Auslastung der Spitzgussanlage, insbesondere durch den Wegfall des Werkzeugwechsels, bei Weitem wieder wett gemacht. Darüber hinaus benötigt das Montagepersonal zum Zusammenfügen der einzelnen Bauteile zur Verbindungseinheit weniger Handgriffe, insbesondere weil ein Bauteil weniger in die Hand genommen werden und mit anderen Bauteilen zusammengefügt werden muss. Somit kann eine Montageperson pro Zeiteinheit eine größere Anzahl an Verbindungseinheiten montieren.

Um einen stabilen Halt des die Hülse und die Halteeinheit umfassenden Bauteils an dem Grundkörper zuverlässig sicherstellen zu können, ist ferner vorgesehen, dass die Halteeinheit wenigstens ein Halteelemente mit einem Kontaktabschnitt aufweist, wobei der Kontaktabschnitt derart ausgebildet und bemessen ist, dass er im montierten Zustand von Hülse und Grundkörper im Wesentlichen vollflächig mit der äußeren Umfangsfläche des Grundkörpers in Kontakt steht. Dieser vollflächige Kontakt gewährleistet, dass das die Hülse und die Halteeinheit umfassende Bauteil spielfrei an dem Grundkörper gehalten ist, so dass es im Betrieb nicht zu unerwünschten Relativbewegungen zwischen diesen Bauteilen kommen kann, welche die Funktion der Verbindungseinheit beeinträchtigen könnten. Vorteilhafterweise sind wenigstens zwei, vorzugsweise einander in Umfangsrichtung diametral gegenüberliegende, derartige Halteelemente vorgesehen. Grundsätzlich können aber auch mehr als zwei solche Halteelemente vorgesehen sein, beispielsweise drei oder vier Haltelemente.

Der Kontaktabschnitt weist einen zur Längsachse konzentrisch gekrümmten Hauptsteg auf, der sich in Umfangsrichtung über einen vorbestimmten Winkelbereich erstreckt und seinen beiden Enden benachbart, vorzugsweise an seinen beiden Enden, über jeweils einen im Wesentlichen in axialer Richtung verlaufenden Verbindungssteg mit der Hülse verbunden ist. Gemäß Vorstehendem verläuft die Haupterstreckungsrichtung des Hauptstegs in Umfangsrichtung, während die Haupterstreckungsrichtung der Verbindungsstege in axialer Richtung verläuft. Dies erlaubt es den Verbindungsstegen, die zum Aufschieben und Verrasten der Hülse auf dem Grundkörper erforderliche Aufweitbarkeit des wenigstens einen Halteelements bereitzustellen.

Zur Erzielung einer rastenden Verbindung der Verbindungseinheit mit dem der Verbindungsanordnung ebenfalls angehörenden Anschlussstutzen ist erfindungsgemäß vorgesehen, dass das wenigstens eine Halteelement einen Widerhakenabschnitt aufweist, der von dem Hauptsteg ausgeht und sich vom Hauptsteg weg in radialer Richtung aufweitet, und dass die eine Anlagefläche der Halteeinheit an dem freien Ende des Widerhakenabschnitts ausgebildet ist.

Wenn dabei eine Kontaktfläche der Verbindungstege einen ersten Flächen abschnitt aufweist, der zur Längsachse konzentrisch angeordnet ist, sowie einen zweiten Flächenabschnitt, der sich in Richtung vom ersten Flächenabschnitt weg radial aufweitet, so kann hierdurch im Zusammenwirken des zweiten Flächenabschnitts mit der Außenumfangsfläche des Grundkörpers infolge der Eigenelastizität des Materials der Halteeinheit eine Kraft erzeugt werden, welche einem Außer-Eingriff-Treten der weiteren Anlagefläche und der weiteren Gegenanlagefläche entgegenwirkt.

In Weiterbildung der Erfindung kann die weitere Anlagefläche der Halteeinheit von einer axialen Stirnfläche des Hauptstegs gebildet werden, welche auf der den Verbindungsstegen abgewandten Seite des Hauptstegs angeordnet ist. Diese Weiterbildung ist insbesondere dann vorteilhaft, wenn der Widerhakenabschnitt vom Hauptsteg ausgeht, da dann beim Versuch, den Anschlussstutzen wieder aus dem Aufnahmeraum herauszuziehen, die Kräfte in einem im Wesentlichen geradlinig verlaufenden Kraftfluss vom Anschlussstutzen in den Widerhakenabschnitt und von dort über den Hauptsteg an den Grundkörper weitergeleitet werden können. Durch den im Wesentlichen geradlinig verlaufenden Kraftfluss ergibt sich eine besonders stabile Konfiguration, so dass die Verbindungsanordnung bis hin zu hohen auf den Anschlussstutzen ausgeübten Kräfte praktisch keinem Beschädigungsrisiko unterliegt.

Wie dies an sich bekannt ist, kann auch der Grundkörper der vorliegenden Erfindung eine Umfangsnut zur Aufnahme eines Dichtungselements, beispielsweise eines O-Rings, aufweisen. In Weiterbildung der Erfindung wird dabei vorgeschlagen, dass die Hülse in dem am Grundkörper montierten Zustand die Umfangsnut allenfalls teilweise überdeckt, vorzugsweise zu weniger als 25% der Längserstreckung der Umfangsnut in axialer Richtung. Dies ermöglicht es, das Dichtungselement bei der Montage der Verbindungseinheit erst dann in die Umfangsnut einzulegen, wenn die Hülse mit der daran einstückig ausgebildeten Halteinheit bereits auf dem Grundkörper montiert ist. Hierdurch wird jedwede Gefahr einer Beschädigung des Dichtungselements durch die Montage der Hülse ausgeschlossen. In diesem Zusammenhang ermöglichen die zur Längsachse der Verbindungseinheit schräg verlaufenden zweiten Flächenabschnitte der Verbindungsstege im Zusammenwirken mit den zurgeordneten Gegenfläche des Grundkörpers, dass die Montageperson die Hülse zum Zwecke der Montage des Dichtungselements so weit zurückziehen kann, dass die gesamte Umfangsnut für das Einlegen des Dichtungselements freiliegt.

Um eine unerwünschte Manipulation des wenigstens einen Halteelements von außen verhindern zu können, kann die Hülse eine über ihren gesamten Umfang geschlossene Außenumfangsfläche aufweisen.

Wie vorstehend bereits angedeutet worden ist, betrifft die Erfindung ferner eine Verbindungsanordnung, umfassend eine Verbindungseinheit der vorstehend diskutierten Ausgestaltung und einen Anschlussstutzen, wobei der Anschlussstutzen eine in Öffnungsrichtung gerichteten Gegenanlagefläche aufweist, die zum Halteeingriff mit der zur Öffnungsrichtung des Aufnahmeraums entgegengesetzt gerichteten Anlagefläche der Halteeinheit bestimmt ist. Dabei kann die eine Gegenanlagefläche des Anschlussstutzens von einer orthogonal zur Längsachse der Verbindungseinheit bzw. der Verbindungsanordnung verlaufenden Begrenzungsfläche wenigstens eines Fensters oder/und wenigstens einer Tasche des Anschlussstutzens gebildet sein. Vorteilhafterweise stimmt die Anzahl der Fenster bzw. Taschen mit jener der Halteelemente der Halteeinheit überein.

Um sicherstellen zu können, dass das wenigstens eine Fenster bzw. die wenigstens eine Tasche beim Einführen des Anschlussstutzen in den Aufnahmeraum auf ein zugehöriges Halteelement trifft, d.h. also, um sicherstellen zu können, dass der Anschlussstutzen sicher mit der Verbindungseinheit verbunden wird, kann vorgesehen sein, dass an der Außenumfangsfläche des Anschlussstutzens oder der Innenumfangsfläche der Hülse wenigstens ein radialer Vorsprung ausgebildet ist, der beim Einführen des Anschlussstutzens in den Aufnahmeraum mit einer korrespondierenden Längsnut am jeweils anderen Bauteil, nämlich der Hülse oder dem Anschlussstutzen, im Sinne der Sicherstellung einer vorbestimmten Relativpositionierung dieser beiden Bauteile in Umfangsrichtung zusammenwirkt. Dabei kann der radiale Vorsprung beispielsweise von einem Längssteg gebildet sein.

In Weiterbildung der Erfindung kann ferner vorgesehen sein, dass die Innenumfangsfläche des Anschlussstutzens einen ersten Abschnitt größeren Durchmessers und einen zweiten Abschnitt kleineren Durchmessers aufweist, welche über einen konischen Abschnitt miteinander verbunden sind. Durch diese Ausgestaltung der Innenumfangsfläche eines Rohrabschnitts des Anschlussstutzens kann erreicht werden, dass das Dichtungselement erst dann mit dem Anschlussstutzen in Kontakt tritt, wenn dieser bereits in der Hülse geführt ist, so dass der Kontakt mit dem konischen Abschnitt erfolgt. Ferner kann die Länge des ersten Abschnitts derart bemessen sein, dass der zweite Abschnitt erst dann mit dem Dichtungselement in Eingriff tritt, wenn der Anschlussstutzen bereits in den Aufnahmeraum eingeführt worden ist. Hierdurch kann erstens das Risiko einer Beschädigung des Dichtungselements beim Einführen des Anschlussstutzens in den Aufnahmeraum reduziert werden. Zweitens kann der Weg, den der Anschlussstutzen zwischen dem ersten Kontakt mit dem Dichtungselement und dem endgültigen Verrasten mit der Dichtungseinheit gegen die vom Eingriff mit dem Dichtungselement herrührende Kraft zurücklegen muss, und damit der vom Montagepersonal aufzubringende Kraftaufwand reduziert werden. Und drittens kann hierdurch eine Leckagefunktion bereitgestellt werden, anhand derer zuverlässig festgestellt werden kann, ob die Verbindungs von Verbindungseinheit und Anschlussstutzen ordnungsgemäß hergestellt worden ist.

Nachzutragen ist noch, dass der Grundkörper aus Kunststoff gefertigt sein kann, beispielsweise aus Polyamid, insbesondere als Spritzgussteil oder mittels eines Korrugators als Endabschnitt eines Wellrohrs. Er kann jedoch auch aus Metall gefertigt sein, beispielsweise aus Messing. Die Hülse mit der an ihr einstückig ausgebildeten Halteeinheit kann vorzusgweise aus Kunststoff, insbesondere als Spritzgussteil, hergestellt sein.

Die Erfindung wird im Folgenden anhand der beigefügten Zeichnung an einem Ausführungsbeispiel näher erläutert werden. Es stellt dar:
- Figur 1: eine Explosionsansicht der erfindungsgemäßen Verbindungseinheit bzw. Verbindungsanordnung;
- Figur 2: einen Längsschnitt durch die Verbindungseinheit bzw. durch die Verbindungsanordnung gemäß Figur 1 im montierten Zustand der Verbindungsanordnung, wobei die Schnittebene der Zeichenebene der Fig. 1 entspricht;
- Figur 3: einen weiteren Längsschnitt durch die Verbindungseinheit bzw. durch die Verbindungsanordnung gemäß Figur 1 ebenfalls im montierten Zustand der Verbindungsanordnung, wobei die Schnittebene orthogonal zur Zeichenebene der Fig. 1 verläuft; und
- Figuren 4 bis 7: verschiedene Ansichten der erfindungsgemäßen Hülse mit integrierter Halteeinheit, nämlich Figur 4 einen Querschnitt, Figuren 5 und 6 zwei Längsschnitte in unterschiedlichen Schnittebenen, und Figur 7 eine perspektivische Ansicht.

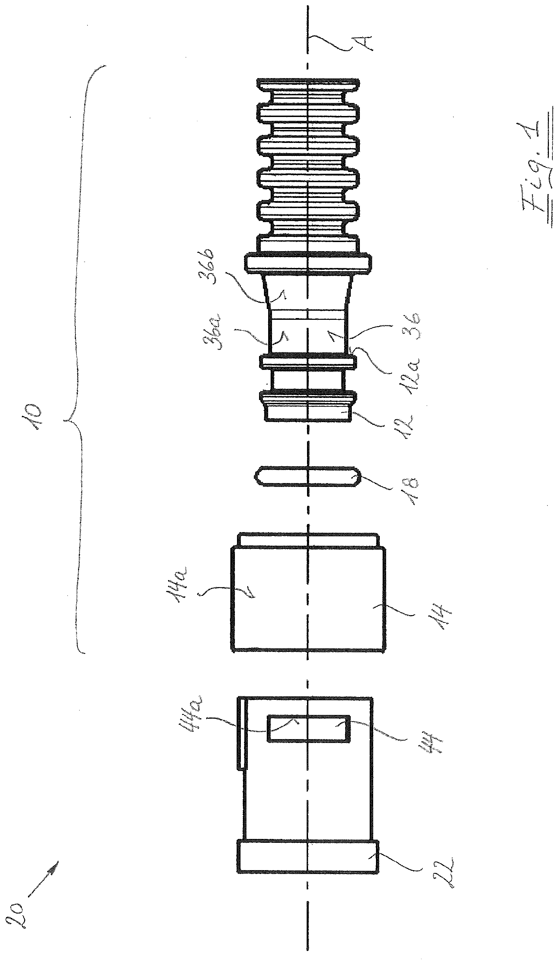

In Fig. 1 ist eine erfindungsgemäße Verbindungseinheit allgemein mit 10 bezeichnet. Sie umfasst einen Grundkörper 12, eine Hülse 14 und ein als O-Ring ausgebildetes Dichtungselement 18. Die Verbindungseinheit 10 ist zur dichtenden Verbindung mit einem Anschlussstutzen 22 ausgebildet und bestimmt, mit dem sie zusammen eine Verbindungsanordnung 20 bildet.

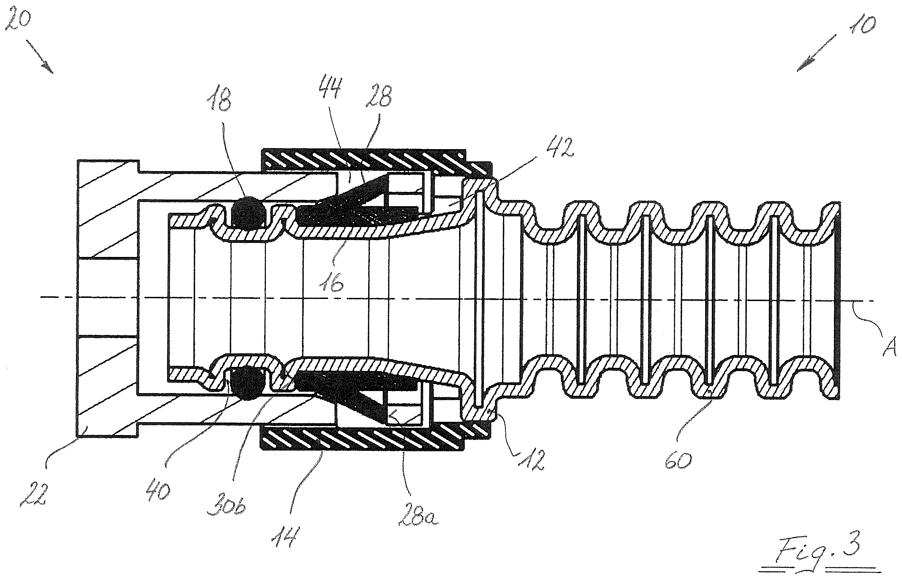

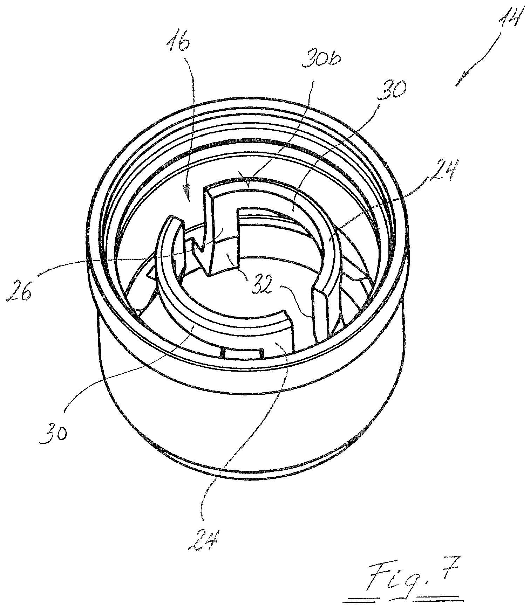

Wie insbesondere in den Figuren 3 bis 7 dargestellt ist, ist die Hülse 14 einstückig mit einer Halteeinheit 16 ausgebildet, welche zum Verrasten der Hülse 14 auf dem Grundkörper 12 und ferner zum Verrasten des Anschlussstutzens 22 in der Verbindungseinheit 10 dient.

Die Halteeinheit 16 umfasst zwei Halteelemente 24, von denen jedes einen Kontaktabschnitt 26 und einen Widerhakenabschnitt 28 umfasst. Dabei wird der Kontaktabschnitt 26 von einem sich zur Längsachse A der Hülse 14 bzw. der gesamten Verbindungseinheit 10 konzentrisch gekrümmten Hauptsteg 30 und zwei Verbindungsstegen 32 gebildet, welche den Hauptsteg 30 mit der Hülse 14 verbinden. Wie in den Figuren dargestellt ist, erstreckt sich der Hauptsteg 30 im Wesentlichen in Umfangsrichtung um die Achse A, während die beiden Verbindungsstege 32 sich im Wesentlichen parallel zur Achse A erstrecken.

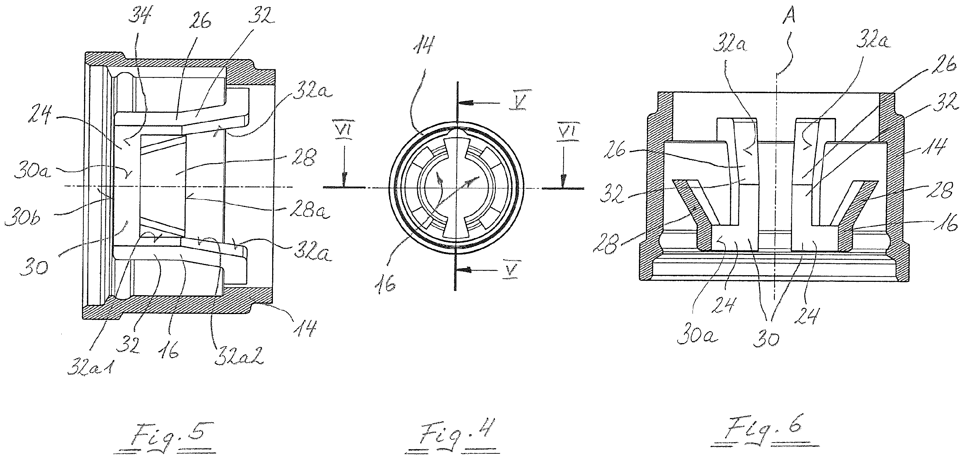

Die nach radial innen weisenden Flächen 30a und 32a des Hauptstegs 30 und der Verbindungsstege 32 bilden zusammen eine Kontaktfläche 34, mit der der Kontaktabschnitt 26 im auf dem Grundkörper 12 montierten Zustand der Hülse 14 vollflächig an einem zugeordneten Oberflächenabschnitt 36 der Außenumfangsfläche des Grundkörpers 12 anliegt (siehe Fig. 3). Wie in den Figuren 1 und 3 dargestellt ist, setzt sich der Oberflächenabschnitt 36 des Grundkörpers 12 aus einem im Wesentlichen kreiszylindrischen Abschnitt 36a und einem sich konisch erweiternden Abschnitt 36b zusammen. In Entsprechung hierzu setzt sich die Innenfläche 32a der Verbindungsstege 32 aus einem im Wesentlichen zur Achse A konzentrisch verlaufenden Abschnitt 32a1 und einem sich konisch erweiternden Abschnitt 32a2 zusammen (siehe Fig. 5).

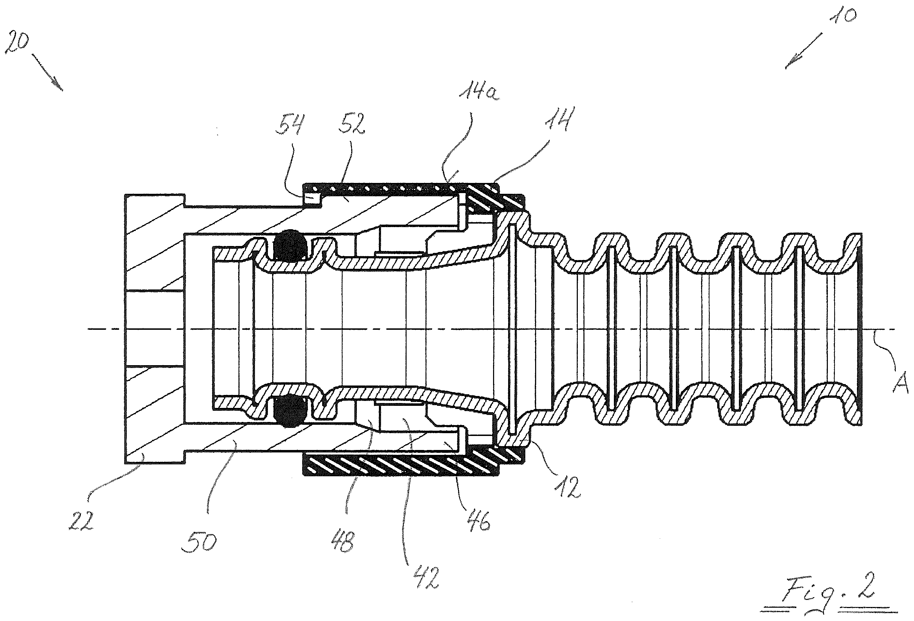

Beim Aufschieben der Hülse 14 auf den Grundkörper 12 dienen die Flächenabschnitte 32a2 als Auflaufschrägen für den Grundkörper 12. Die Hauptstege 30 der Halteelemente 24 können aufgrund der dem Material der Verbindungsstege 32 inhärenten Flexibilität nach radial außen ausweichen und ermöglichen so das weitere Aufschieben der Hülse 14 auf den Grundkörper 12. Hat die Hülse 14 die in den Figuren 2 und 3 dargestellte Relativposition zum Grundkörper 12 erreicht, so können sich die verformten Verbindungsstege 32 wieder entspannen, so dass sich die Halteelemente 24 mit ihrer Kontaktfläche 34 formschlüssig an den Oberflächenabschnitt 36 des Grundkörpers 12 anlegen.

Wie man in den Figuren 2 und 3 ferner erkennt, liegt in diesem vormontierten Zustand von Grundkörper 12 und Hülse 14 eine Umfangsnut 40 des Grundkörpers 12, welche zur Aufnahme des Dichtungselements 18 dient, im Wesentlichen vollständig außerhalb der Hülse 14. In jedem Fall ist die Überdeckung der Umfangsnut 40 durch die Hülse 14 so gering, dass die Hülse 14 zum Einlegen des Dichtungselements 18 in die Umfangsnut 40 noch so weit zurückgezogen werden kann, bis die Umfangsnut 40 vollständig frei, d.h. von der Hülse 14 nicht mehr überdeckt, zugänglich ist. Im Zuge dieses Zurückziehens laufen die Verbindungsstege 32 mit ihren Innenflächenabschnitten 32a auf den sich konisch erweiternden Oberflächenabschnitt 36b des Grundkörpers 12 auf, woraus eine Rückstellkraft resultiert, welche die Hülse 14 wieder in die in den Figuren 2 und 3 dargestellte Stellung zurückzuführen sucht.

In dem so herbeigeführten montierten Zustand der Verbindungseinheit 10 bilden der Grundkörper 12 und die Hülse 14 zwischen sich einen Aufnahmeraum 42, der zur Aufnahme des Anschlussstutzens 22 dient.

Wie in den Figuren 1 und 3 dargestellt ist, verfügt der Anschlussstutzen 22 über zwei Fenster 44, die zum Zusammenwirken mit den Widerhakenabschnitten 28 der Halteelemente 24 bestimmt sind. An seinem in Fig. 2 rechten, freien Ende verfügt der Anschlussstutzen 22 über einen Rohrabschnitt 46 größeren Innendurchmessers, der in Richtung von dem freien Ende weg über einen konischen Abschnitt 48 in einen Rohrabschnitt 50 kleineren Durchmessers übergeht. Die Fenster 44 befinden sich im Übergang zwischen dem Rohrabschnitt 46 größeren Innendurchmessers und dem konischen Abschnitt 48. Beim Einschieben des Anschlussstutzens 22 in den Aufnahmeraum 42 läuft der Anschlussstutzen 22 mit dem Rohrabschnitt 46 größeren Innendurchmessers gegen die Widerhakenabschnitte 28 der Halteelemente 24 an und drückt diese nach radial innen. Der Innendurchmesser des Rohrabschnitts 46 ist dabei derart bemessen, dass den Widerhakenabschnitten 28 genügend Raum zum Ausweichen bleibt. Gelangen die Fenster 44 in einen Längenabschnitt der Hülse 14, in dem sich die Widerhakenabschnitte 28 der Halteelemente 24 befinden, so können sich die Widerhakenabschnitte 28 wieder nach radial außen aufweiten, wobei sie sich in die Fenster 44 hinein bewegen. Diese Stellung ist in Fig. 3 dargestellt. Sie entspricht der fertig montierten Stellung der Verbindungsanordnung 20.

Wird ausgehend von dieser Stellung versucht, den Anschlussstutzen 22 wieder aus dem Aufnahmeraum 42 herauszuziehen, so tritt eine axiale Stirnfläche 44a des Anschlussstutzens 22, die Teil der das Fenster 44 umgrenzenden Fläche ist, in Anlage mit einer axialen Stirnfläche 28a am freien Ende der Widerhakenabschnitte 28. Die Fläche 28a bildet dabei die eine Anlagefläche im Sinne dieser Erfindung, während die Fläche 44a die eine Gegenanlagefläche im Sinne der Erfindung bildet. Infolge dieser gegenseitigen Anlage der Flächen 44a und 28a werden die Halteelemente 24 mit einer axialen Stirnfläche 30b der Hauptstege 30 in axiale Anlage gegen eine axiale Fläche 12a des Grundkörpers 12 gedrückt. Die Fläche 30b bildet dabei die weitere Anlagefläche im Sinne der Erfindung, während die Fläche 12a die weitere Gegenanlagefläche im Sinne der Erfindung bildet.

Infolge dieser Ausgestaltung kann die Verbindung des Anschlussstutzens 22 mit der Hülse 14 unter Vermittlung der mit der Hülse 14 einstückig ausgebildeten Halteeinheit 16 nur unter Beschädigung dieser Bauteile wieder gelöst werden. Das Gleiche gilt auch für die Demontage der Hülse 14 vom Grundkörper 12. An dieser Stelle sei daher darauf hingewiesen, dass der Begriff "unlösbar" im Zusammenhang mit der vorliegenden Erfindung in dem Sinne zu verstehen ist, dass der Anschlussstutzen 22 von der Verbindungseinheit 10 bzw. die Hülse 14 von dem Grundkörper 12 nur unter Beschädigung dieser Bauelemente wieder abgezogen werden kann. Anhand dieser Beschädigungen kann eine unerwünschte Manipulation an der Verbindungseinheit 10 bzw. der Verbindungsanordnung 20 ohne Weiteres erkannt werden. Beschädigungsfrei kann der Anschlussstutzen nicht mehr von der Verbindungseinheit 10 bzw. die Hülse 14 nicht mehr vom Grundkörper 12 gelöst werden.

Die Unlösbarkeit kommt konstruktiv auch dadurch zum Ausdruck, dass die Außenumfangsfläche 14a der Hülse 14 über ihren gesamten Umfang geschlossen ausgebildet ist. Durch diese Maßnahme gibt es keine Möglichkeit, mit einem wie auch immer gearteten Werkzeug von außen auf die Halteeinheit 16 einzuwirken, um deren Eingriff mit der Hülse 14 oder/und dem Anschlussstutzen 22 zu lösen.

Um sicherstellen zu können, dass der Anschlussstutzen 22 in einer Relativorientierung zur Verbindungseinheit 10, insbesondere zur Hülse 14, an die Verbindungseinheit 10 herangeführt wird, in der sich die Fenster 44 an einer Umfangsposition befinden, die der Umfangsposition der Widerhakenabschnitte 28 entspricht, ist an der Außenumfangsfläche des Anschlussstutzens 22 ein Führungssteg 52 ausgebildet (siehe Fig. 2), der beim Einführen des Anschlussstutzens 22 in die Hülse 14 in eine Führungsnut 54 der Hülse 14 eingreift.

Nachzutragen ist noch, dass der konische Oberflächenabschnitt 48 im montierten Zustand der Verbindungsanordnung 20 außen an den Widerhakenabschnitten 28 der Halteelemente 24 anliegt und diese somit bei dem Versuch, den Anschlussstutzen 22 wieder aus dem Aufnahmeraum 42 herauszuziehen, abstützt und somit gegen eine unerwünschte Verformung stabilisiert.

Nachzutragen ist ferner, dass durch die Ausbildung der Innenfläche des Anschlussstutzens 22 mit dem Abschnitt 46 größeren Innendurchmessers, dem konischen Abschnitt 48 und dem Abschnitt 50 kleineren Innendurchmessers das Dichtungselement 18 nicht sofort beim Einschieben des Anschlussstutzens 22 in den Aufnahmeraum 42 mit dem Anschlussstutzen in Kontakt tritt, sondern erst im Bereich des Flächenabschnitts 50 kleineren Innendurchmessers. Auf diese Weise entfaltet das Dichtungselement 18 erst kurz vor dem Verrasten der Widerhakenabschnitte 28 in den Fenstern 44 seine Dichtungswirkung. Somit wird eine nicht ordnungsgemäße Herstellung der Verbindung von Verbindungseinheit 10 und Anschlussstutzen 22 durch eine Leckage der Verbindungsanordnung 20 angezeigt.

Nachzutragen ist schließlich auch noch, dass der Grundkörper 12 im dargestellten Ausführungsbeispiel als Endabschnitt eines Wellrohrs 60 ausgebildet ist, d.h. simultan mit der Herstellung des Wellrohrs 60 in einem Korrugator gefertigt werden kann. Es ist grundsätzlich jedoch auch möglich, den Grundkörper 12 als gesondertes Spritzgussteil herzustellen, das anschließend mit dem Wellrohr oder einem Glattrohr verbunden wird. Denkbar ist ferner, den Grundkörper 12 als Drehteil herzustellen.

## Patentansprüche

1. Verbindungseinheit (10), umfassend:
. einen Grundkörper (12), der dazu ausgebildet und bestimmt ist, mit einem nicht Teil der Verbindungseinheit (10) bildenden Anschlussstutzen (22) verbunden zu werden,
. eine Hülse (14), die im montierten Zustand der Verbindungseinheit (10) an dem Grundkörper (12) in bezogen auf eine Längsachse (A) der Verbindungseinheit (10) axialer Richtung befestigt ist und mit dem Grundkörper (12) einen zu einem Ende des Grundkörpers (12) hin offenen Aufnahmeraum (42) bildet, der zur Aufnahme des Anschlussstutzens (22) bestimmt ist, und
. eine Halteeinheit (16), welche eine zur Öffnungsrichtung des Aufnahmeraums (42) entgegengesetzt gerichtete Anlagefläche (28a) aufweist, welche zum Zusammenwirken mit einer in Öffnungsrichtung gerichteten Gegenanlagefläche (44a) des Anschlussstutzens (22) bestimmt ist,
wobei die Halteeinheit (16) wenigstens ein Halteelement (24) mit einem Kontaktabschnitt (26) aufweist, wobei der Kontaktabschnitt (26) derart ausgebildet und bemessen ist, dass er im montierten Zustand von Hülse (14) und Grundkörper (12) im Wesentlichen vollflächig mit der äußeren Umfangsfläche (36) des Grundkörpers (12) in Kontakt steht,
wobei der Kontaktabschnitt (26) einen zur Längsachse (A) konzentrisch gekrümmten Hauptsteg (30) aufweist, der sich in Umfangsrichtung über einen vorbestimmten Winkelbereich erstreckt und seinen beiden Enden benachbart über jeweils einen im Wesentlichen in axialer Richtung (A) verlaufenden Verbindungssteg (32) mit der Hülse (14) verbunden ist, und wobei die Hülse (14) und die Halteeinheit (16) miteinander einstückig ausgebildet sind und wobei die Halteeinheit (16) eine in Öffnungsrichtung des Aufnahmeraums (42) gerichtete weitere Anlagefläche (30b) aufweist, welche zum Zusammenwirken mit einer zur Öffnungsrichtung entgegengesetzt gerichteten weiteren Gegenanlagefläche (12a) des Grundkörpers (12) bestimmt ist,
**dadurch gekennzeichnet,**
**dass** das wenigstens eine Halteelement (24) einen Widerhakenabschnitt (28) aufweist, der von dem Hauptsteg (30) ausgeht und sich vom Hauptsteg (30) weg in radialer Richtung aufweitet, und
**dass** die eine Anlagefläche (28a) der Halteeinheit (16) an dem freien Ende des Widerhakenabschnitts (28) ausgebildet ist,
sodass die Verbindungseinheit (10) unlösbar mit dem Anschlussstutzen (22) verbunden werden kann, sodass der Anschlussstutzen (22) von der Verbindungseinheit (10) bzw. die Hülse (14) von dem Grundkörper (12) nur unter Beschädigung dieser Bauelemente wieder abgezogen werden kann.

2. Verbindungseinheit nach Anspruch 1,
**dadurch gekennzeichnet, dass** eine Kontaktfläche (32a) der Verbindungstege (32) einen ersten Flächenabschnitt (32a1) aufweist, der zur Längsachse (A) konzentrisch angeordnet ist, sowie einen zweiten Flächenabschnitt (32a2), der sich in Richtung vom ersten Flächenabschnitt (32a1) weg radial aufweitet.

3. Verbindungseinheit nach Anspruch 1 oder 2,
**dadurch gekennzeichnet, dass** die weitere Anlagefläche (30b) der Halteeinheit (16) von einer axialen Stirnfläche des Hauptstegs (30) gebildet wird, welche auf der den Verbindungsstegen (32) abgewandten Seite des Hauptstegs (30) angeordnet ist.

4. Verbindungseinheit nach einem der Ansprüche 1 bis 3,
**dadurch gekennzeichnet, dass** der Grundkörper (12) eine Umfangsnut (40) zur Aufnahme eines Dichtungselements (18), beispielsweise eines O-Rings, aufweist.

5. Verbindungseinheit nach Anspruch 4,
**dadurch gekennzeichnet, dass** die Hülse (14) in dem am Grundkörper (12) montierten Zustand die Umfangsnut (40) allenfalls teilweise überdeckt, vorzugsweise zu weniger als 25% der Längserstreckung der Umfangsnut (40) in axialer Richtung (A).

6. Verbindungseinheit nach einem der Ansprüche 1 bis 5,
**dadurch gekennzeichnet, dass** die Hülse (14) eine über ihren gesamten Umfang geschlossene Außenumfangsfläche (14a) aufweist.

7. Verbindungsanordnung (20), umfassend eine Verbindungseinheit (10) nach einem der vorhergehenden Ansprüche und einen Anschlussstutzen (22), wobei der Anschlussstutzen (22) eine in Öffnungsrichtung gerichteten Gegenanlagefläche (44a) aufweist, die zum Halteeingriff mit der zur Öffnungsrichtung des Aufnahmeraums (42) entgegengesetzt gerichteten Anlagefläche (28a) der Halteeinheit (16) bestimmt ist.

8. Verbindungsanordnung nach Anspruch 7,
**dadurch gekennzeichnet, dass** die eine Gegenanlagefläche (44a) des Anschlussstutzens (22) von einer orthogonal zur Längsachse (A) der Verbindungseinheit (10) bzw. der Verbindungsanordnung (20) verlaufenden Begrenzungsfläche (44a) wenigstens eines Fensters (44) oder/und wenigstens einer Tasche des Anschlussstutzens (22) gebildet ist.

9. Verbindungsanordnung nach Anspruch 7 oder 8,
**dadurch gekennzeichnet, dass** an der Außenumfangsfläche des Anschlussstutzens (22) oder der Innenumfangsfläche der Hülse wenigstens ein radialer Vorsprung (52) ausgebildet ist, der beim Einführen des Anschlussstutzens (22) in den Aufnahmeraum (42) mit einer korrespondierenden Längsnut (54) am jeweils anderen Bauteil, nämlich der Hülse (14) oder dem Anschlussstutzen, im Sinne der Sicherstellung einer vorbestimmten Relativpositionierung dieser beiden Bauteile in Umfangsrichtung zusammenwirkt.

10. Verbindungsanordnung nach einem der Ansprüche 7 bis 9,
**dadurch gekennzeichnet, dass** die Innenumfangsfläche des Anschlussstutzens (22) einen ersten Abschnitt (46) größeren Durchmessers und einen zweiten Abschnitt (50) kleineren Durchmessers aufweist, welche vorzugsweise über einen konischen Abschnitt (48) miteinander verbunden sind.

11. Verbindungsanordnung nach Anspruch 10,
**dadurch gekennzeichnet, dass** die Länge des ersten Abschnitts (46) derart bemessen ist, dass der zweite Abschnitt (50) erst dann mit dem Dichtungselement (18) in Eingriff tritt, wenn der Anschlussstutzen (22) bereits in den Aufnahmeraum (42) eingeführt worden ist.

## Claims

1. Connection unit (10) comprising:
• a main body (12) which is designed and intended to be connected to a connecting piece (22) which does not form part of the connection unit (10),
• a sleeve (14) which, in the mounted state of the connection unit (10), is attached to the main body (12) in the axial direction with respect to a longitudinal axis (A) of the connection unit (10), and forms a receiving space (42) with the main body (12) that is open towards one end of the main body (12) and is intended for receiving the connecting piece (22), and
• a holding unit (16) having an abutment surface (28a) facing in the opposite direction to the opening direction of the receiving space (42), which abutment surface is intended to interact with an opposing abutment surface (44a) of the connecting piece (22) that faces in the opening direction,
the holding unit (16) having at least one holding element (24) which has a contact portion (26), the contact portion (26) being designed and dimensioned such that, in the mounted state of the sleeve (14) and the main body (12), said contact portion is in contact with the outer circumferential surface (36) of the main body (12) substantially over the entire surface of said portion, the contact portion (26) having a main web (30) which is concentrically curved with respect to the longitudinal axis (A) and extends in the circumferential direction over a predetermined angular range and which, adjacent to the two ends thereof, is connected to the sleeve (14) in each case by a connecting web (32) which extends substantially in the axial direction (A), and the sleeve (14) and the holding unit (16) being integrally formed with one another, and the holding unit (16) having a further abutment surface (30b) facing in the opening direction of the receiving space (42), which abutment surface is intended to interact with a further opposing abutment surface (12a) of the main body (12) that faces in the opposite direction to the opening direction, **characterised in that** the at least one holding element (24) has a barb portion (28) which starts at the main web (30) and widens in the radial direction, away from the main web (30), and **in that** the one abutment surface (28a) of the holding unit (16) is formed at the free end of the barb portion (28), such that the connection unit (10) can be non-detachably connected to the connecting piece (22), such that the connecting piece (22) cannot be removed from the connection unit (10) or the sleeve (14) cannot be removed from the main body (12) without damaging said components.

2. Connection unit according to claim 1, **characterised in that** a contact surface (32a) of the connecting webs (32) has a first surface portion (32a1), which is arranged concentrically to the longitudinal axis (A), and a second surface portion (32a2), which radially widens in the direction away from the first surface portion (32a1).

3. Connection unit according to either claim 1 or 2, **characterised in that** the further abutment surface (30b) of the holding unit (16) is formed by an axial end face of the main web (30), which is arranged on the side of the main web (32) that faces away from the connecting webs (30).

4. Connection unit according to any of claims 1 to 3, **characterised in that** the main body (12) has a circumferential groove (40) for receiving a sealing element (18), for example an O-ring.

5. Connection unit according to claim 4, **characterised in that** the sleeve (14), in the state in which it is mounted on the main body (12), at most partially covers the circumferential groove (40), preferably by less than 25% of the longitudinal extension of the circumferential groove (40) in the axial direction (A).

6. Connection unit according to any of claims 1 to 5, **characterised in that** the sleeve (14) has a closed outer circumferential surface (14a) over the entire circumference thereof.

7. Connection arrangement (20) comprising a connection unit (10) according to any of the preceding claims, and a connecting piece (22), wherein the connecting piece (22) has an opposing abutment surface (44a) facing in the opening direction, which is intended for holding engagement with the abutment surface (28a) of the holding unit (16) that faces in the opposite direction to the opening direction of the receiving space (42).

8. Connection arrangement according to claim 7, **characterised in that** the one opposing abutment surface (44a) of the connecting piece (22) is formed by a delimiting face (44a) of at least one window (44) and/or of at least one pocket of the connecting piece (22), which delimiting face extends orthogonally to the longitudinal axis (A) of the connection unit (10) or connection arrangement (20).

9. Connection arrangement according to either claim 7 or claim 8, **characterised in that** at least one radial projection (52) is formed on the outer circumferential surface of the connecting piece (22) or on the inner circumferential surface of the sleeve, which radial projection, when inserting the connecting piece (22) into the receiving space (42), interacts with a corresponding longitudinal groove (54) on the relevant other component, specifically the sleeve (14) or the connecting piece, in order to ensure a predetermined relative positioning of these two components in the circumferential direction.

10. Connection arrangement according to any of claims 7 to 9, **characterised in that** the inner circumferential surface of the connecting piece (22) has a first portion (46) which has a larger diameter, and a second portion (50) which has a smaller diameter, which portions are preferably interconnected by a conical portion (48).

11. Connection arrangement according to claim 10, **characterised in that** the length of the first portion (46) is dimensioned such that the second portion (50) engages with the sealing element (18) only when the connecting piece (22) has already been inserted into the receiving space (42).

## Revendications

1. Unité de raccordement (10), comportant :
• un corps de base (12), qui est conçu pour et destiné à être relié à un manchon de connexion (22) ne faisant pas partie de l'unité de raccordement (10),
• une douille (14), qui, dans l'état monté de l'unité de raccordement (10) est fixée au corps de base (12) selon une direction axiale en référence à un axe longitudinal (A) de l'unité de raccordement (10) et forme avec le corps de base (12) un espace de logement (42), ouvert vers une extrémité du corps de base (12), qui est destiné au logement du manchon de connexion (22), et
• une unité de retenue (16), qui comprend une surface d'appui (28a), dirigée à l'opposé de la direction d'ouverture de l'espace de logement (42), qui est destinée à une coopération avec une surface de contre-appui (44a) du manchon de connexion (22) dirigée en direction de l'ouverture,
dans laquelle l'unité de retenue (16) comprend au moins un élément de retenue (24) avec un tronçon de contact (26), dans laquelle le tronçon de contact (26) est conçu et dimensionné de manière à ce que, dans l'état monté de la douille (14) et du corps de base (12), il soit en contact sensiblement sur toute la surface avec la surface circonférentielle externe (36) du corps de base (12),
dans laquelle le tronçon de contact (26) comprend un élément transverse principal (30), incurvé de manière concentrique par rapport à l'axe longitudinal (A), qui s'étend dans la direction circonférentielle sur une plage angulaire prédéfinie et est relié à la douille (14) au voisinage de ses extrémités respectivement via une branche de raccordement (32) s'étendant sensiblement dans une direction axiale (A), la douille (14) et l'unité de retenue (16) étant conçues d'une seule pièce, et dans laquelle l'unité de retenue (16) comprend une autre surface d'appui (30b), dirigée en direction de l'ouverture de l'espace de logement (42), laquelle est destinée à coopérer avec une autre surface de contre-appui (12a) du corps de base (12), dirigée à l'opposé de la direction d'ouverture,
**caractérisée en ce**
**que** l'au moins un élément de retenue (24) comprend un secteur de contre-crochet (28) qui part de l'élément transverse principal (30) et qui s'élargit depuis l'élément transverse principal (30) en direction radiale, et
en ce que la surface d'appui (28a) de l'unité de retenue (16) est conçue au niveau d'une extrémité libre du secteur de contre-crochet (28),
de sorte que l'unité de raccordement (10) peut être reliée de manière non détachable au manchon de connexion (22), de sorte que le manchon de connexion (22) peut être extrait de nouveau de l'unité de raccordement (10) ou de la douille (14) du corps de base (12) uniquement en cas d'endommagement de ce composant.

2. Unité de raccordement selon la revendication 1,
**caractérisée en ce qu'**une surface de contact (32a) de la branche de raccordement (32) comprend un premier secteur de surface (32a1) qui est disposé concentriquement à l'axe longitudinal (A), ainsi qu'un second secteur de surface (32a2) qui s'étend en s'éloignant radialement en direction du premier secteur de surface (32a1).

3. Unité de raccordement selon la revendication 1 ou 2,
**caractérisée en ce que** l'autre surface d'appui (30b) de l'unité de retenue (16) est formée par une surface frontale axiale de l'élément transverse principal (30), qui est disposée sur le côté de l'élément transverse principal (30) opposé aux branches de raccordement (32).

4. Unité de raccordement selon l'une quelconque des revendications 1 à 3,
**caractérisée en ce que** le corps de base (12) comprend une gorge circonférentielle (40) pour loger un élément d'étanchéité (18), par exemple un joint torique.

5. Unité de raccordement selon la revendication 4,
**caractérisée en ce que** la douille (14), dans l'état monté sur le corps de base (12), recouvre au mieux en partie la gorge circonférentielle (40), de préférence de moins de 25 % de l'étendue longitudinale de la gorge circonférentielle (40) dans la direction axiale (A).

6. Unité de raccordement selon l'une quelconque des revendications 1 à 5,
**caractérisée en ce que** la douille (14) comprend une surface circonférentielle externe (14a) fermée sur toute sa circonférence.

7. Agencement de raccordement (20), comportant une unité de raccordement (10) selon l'une quelconque des revendications précédentes et un manchon de connexion (22), dans lequel le manchon de connexion (22) comprend une surface de contre-appui (44a), dirigée en direction de l'ouverture, qui est destinée à la prise retenue avec la surface d'appui (28a) de l'unité de retenue (16), dirigée à l'opposé de la direction d'ouverture de l'espace de logement (42).

8. Agencement de raccordement selon la revendication 7,
**caractérisé en ce que** la surface de contre-appui (44a) du manchon de connexion (22) est formée par une surface de délimitation (44a), s'étendant orthogonalement à l'axe longitudinal (A) de l'unité de raccordement (10) ou de l'agencement de raccordement (20), d'au moins une fenêtre (44) ou/et d'au moins une poche du manchon de connexion (22).

9. Agencement de raccordement selon la revendication 7 ou 8,
**caractérisé en ce qu'**au niveau de la surface circonférentielle externe du manchon de connexion (22) ou de la surface circonférentielle interne de la douille est formée au moins une saillie radiale (52) qui, lors de l'introduction du manchon de connexion (22) dans l'espace de logement (42), coopère dans la direction circonférentielle avec une gorge longitudinale correspondante (54) au niveau respectivement d'un autre composant, à savoir la douille (14) ou le manchon de connexion, du point de vue de la sécurité d'un positionnement relatif prédéfini de ces deux composants.

10. Agencement de raccordement selon l'une quelconque des revendications 7 à 9,
**caractérisé en ce que** la surface circonférentielle interne du manchon de connexion (22) comprend une première section (46) de plus grand diamètre et une seconde section (50) de plus petit diamètre, qui sont reliées entre elles de préférence via une section conique (48).

11. Agencement de raccordement selon la revendication 10,
**caractérisé en ce que** la longueur de la première section (46) est dimensionnée de manière à ce que la seconde section (50) soit seulement en prise avec l'élément d'étanchéité (18) lorsque le manchon de connexion (22) a déjà été introduit dans l'espace de logement (42).
